# EUROPÄISCHE PATENTSCHRIFT

(11) **EP 2 750 944 B1**
(45) Veröffentlichungstag und Bekanntmachung des Hinweises auf die Patenterteilung: **01.03.2017**
(21) Anmeldenummer: 12745851.1
(22) Anmeldetag: 08.08.2012
(51) Int. Cl.: B60T 8/1755

(54) **TEMPORÄRE KOMPENSATION DER UNGEWOLLTEN VERZÖGERUNG DURCH BREMSEINGRIFFE VON ESP-FUNKTIONEN**
TEMPORARY COMPENSATION OF UNDESIRED DECELARATION DUE TO BRAKING INTERVENTIONS BY ESP FUNCTIONS
COMPENSATION TEMPORAIRE DU RETARD INVOLONTAIRE PAR INTERVENTIONS DE FREINAGE DE FONCTIONS ESP (PROGRAMME DE STABILITÉ ÉLECTRONIQUE)

(30) Priorität: 02.09.2011 DE 102011082034
(43) Veröffentlichungstag der Anmeldung: 09.07.2014
(73) Patentinhaber: Robert Bosch GmbH, 70442 Stuttgart (DE)
(72) Erfinder: ELTER, Stephan, 74189 Weinsberg (DE)
(86) Internationale Anmeldenummer: PCT/EP2012/065533
(87) Internationale Veröffentlichungsnummer: WO 2013/029947

(56) Entgegenhaltungen:
- WO-A1-2011/083004
- DE-A1-102009 026 813

## Beschreibung

Die vorliegende Erfindung betrifft ein Verfahren sowie eine Vorrichtung zur temporären Kompensation der durch einen Bremseingriff eines elektronischen Stabilitätsprogrammes (ESP) hervorgerufenen Längsdynamikgrößenänderung in einem Kraftfahrzeug.

### Stand der Technik

In modernen Kraftfahrzeugen dienen heutzutage vielfach elektronische Stabilitätsprogramme (ESP) zur Erhöhung der Fahrstabilität des Fahrzeuges und leisten dadurch als Fahrerassistenzsystem einen aktiven Beitrag zur Fahrsicherheit. ESP-Systeme wirken durch gezieltes Abbremsen einzelner Räder einem Ausbrechen des Kraftfahrzeuges in kritischen Fahrsituationen entgegen, um so die Kontrolle des Fahrers über das Fahrzeug sicherzustellen. Hierbei wird durch gezieltes Bremsen einzelner Räder sowohl ein Übersteuern, als auch ein Untersteuern des Kraftfahrzeuges verhindert.

Zur Ermittlung kritischer Fahrsituation vergleicht das ESP-System permanent den Fahrerwunsch mit dem Fahrzustand des Kraftfahrzeuges. Dabei liefern Lenkwinkelsensoren Informationen hinsichtlich der vom Fahrer gewünschten Lenkrichtung, das Motormanagement Informationen hinsichtlich des vom Fahrer abgerufenen Motormoments und Raddrehzahlsensoren des Anti-Blockier-Systems sowie Gierratensensoren Informationen über das tatsächliche Fahrverhalten des Kraftfahrzeuges. Wird eine hinreichende Abweichung zwischen dem ermittelten Fahrzustand des Kraftfahrzeuges und dem Fahrerwunsch festgestellt, greift das ESP-System als Assistenzsystem ein. Ein Übersteuern des Kraftfahrzeuges wird dabei beispielsweise durch Abbremsen des kurvenäußeren Vorderrades, ein Untersteuern beispielsweise durch Abbremsen des kurveninneren Hinterrades korrigiert. Darüber hinaus kann es vorgesehen sein, dass das ESP-System auch Einfluss auf das Motormanagement nimmt und in kritischen Fahrsituationen die Motorleistung senkt, um ein Durchdrehen der Antriebsräder zu verhindern.

Insbesondere bei sportlicher Fahrweise des Kraftfahrzeuges kann es jedoch gewünscht sein, dass das Kraftfahrzeug eine erhöhte Dynamik zeigt. Hierzu kann es vorgesehen sein, dass das ESP-System ein Giermoment erzeugt, um das Kraftfahrzeug agiler zu machen und um ein Untersteuern zu verhindern. Dazu bremst das System kurveninnere Räder, wodurch das gewünschte in die Kurve eindrehende Giermoment entsteht. Ein solcher Eingriff soll vom Fahrer des Kraftfahrzeuges jedoch als solcher nicht spürbar sein. Werden aber Räder gebremst wird neben dem gewünschten Giermoment auch eine Längsverzögerung des Fahrzeuges hervorgerufen, die der Fahrer unter Umständen spürt. Um dies zu verhindern kann es vorgesehen sein, eine Längsverzögerung des Kraftfahrzeuges, die durch einen Giermomenten-Bremseingriff des ESP-Systems entsteht, durch eine Motormomentenanhebung oberhalb der Fahrervorgabe um den Beitrag des Bremsmomentes zu kompensieren. Es tritt somit keine spürbare Längsverzögerung ein.

Aus Sicherheitsgründen kann man die Anhebung aber nur in wenigen Fahrsituationen und auch da nur Teilweise erlauben. Die Kompensation wird daher mit beispielsweise maximal 70% des Bremsmomentes und nur im angetriebenen Fall durchgeführt.

Ein derartiges ESP-System ist zum Beispiel aus dem Dokument WO 2011/083004 A1 bekannt.

### Offenbarung der Erfindung

Mit der vorliegenden Erfindung wird ein Verfahren zur temporären Kompensation der durch einen Bremseingriff eines elektronischen Stabilitätsprogrammes (ESP) hervorgerufenen Längsdynamikgrößenänderung in einem Kraftfahrzeug vorgeschlagen, aufweisend die Verfahrensschritte:
- Ermitteln der durch den Bremseingriff hervorgerufenen Längsdynamikgrößenänderung;
- Festlegen eines Filters zur Filterung des ermittelten Längsdynamikgrößenänderungswertes;
- Filtern des ermittelten Längsdynamikgrößenänderungswertes mittels des festgelegten Filters zum Erhalt eines gefilterten Längsdynamikgrößenänderungswertes;
- Ermittlung der Differenz zwischen dem ermittelten Rohwert der Längsdynamikgrößenänderung und dem gefilterten Längsdynamikgrößenänderungswert;
- Änderung des vom Fahrer des Kraftfahrzeuges abgerufenen und auf die Antriebsräder des Kraftfahrzeuges einwirkenden Motormomentes in Abhängigkeit des ermittelten Differenzwertes zum Erhalt eines Kompensationsmotormoments, wobei bei einer Änderung des vom Fahrer des Kraftfahrzeuges abgerufenen Motormoments im Zeitpunkt der Kompensation eine Anpassung des Filters und/oder des Schwellenwertes, zum Erhalt eines in Richtung der vom Fahrer gewünschten Motormomentänderung angepassten Kompensationsmotormoments, erfolgt.

Durch das erfindungsgemäße Verfahren wird die Gefahr reduziert, dass das Fahrzeug selbstständig beschleunigen kann. Eine Kompensation der durch einen ESP-Bremseingriff auftretenden Längsdynamikänderung wird damit auch im nicht angetriebenen Fall möglich. Durch das erfindungsgemäße Verfahren wird nur die Änderung der Längsdynamik kompensiert. Das statische Bremsmoment hingegen bleibt unverändert.

Unter Längsdynamikänderung ist dabei im Sinne der Erfindung eine Längskraftänderung und/oder eine Längsverzögerung zu verstehen. Längsdynamik steht somit im nachfolgenden stellvertretend für die Begriffe Längskraftänderung bzw. Längsverzögerung.

In einer Ausgestaltung des erfindungsgemäßen Verfahrens erfolgt die Änderung des vom Fahrer des Kraftfahrzeuges abgerufenen und auf die Antriebsräder des Kraftfahrzeuges einwirkenden Motormomentes zum Erhalt eines Kompensationsmotormoments um den ermittelten Differenzwert zwischen Rohwert und gefiltertem Wert der Längsdynamikgrößenänderung.

Zur Ermittlung der durch den ESP-bedingten Bremseingriff hervorgerufenen Längsdynamikgrößenänderung kann beispielsweise auf die bereits im ESP-System vorhandenen Informationen über die Fahrzeugdynamik, wie beispielsweise Lenkwinkel, Raddrehzahl und Gierrate zurückgegriffen werden.

Es hat sich überraschend herausgestellt, dass eine permanente vollständige Kompensation der durch das Bremsmoment verursachten Längsdynamikgrößenänderung nicht notwendig ist, da der Fahrer hauptsächlich die Längsdynamikgrößenänderung wahrnimmt. Durch das erfindungsgemäße Verfahren kann die Wahrnehmbarkeit der durch das Bremsmoment auftreten Längsdynamikgrößenänderung deutlich reduziert werden. Der erhaltene gefiltere Längsdynamikgrößenänderungswert ist dabei der Ziel- oder Sollwert der durch den Fahrer maximal wahrnehmbaren Längsdynamikgrößenänderung. Gleichzeitig wird sichergestellt, dass insbesondere auch im nicht angetriebenen Fall eine ungewollte Beschleunigung des Kraftfahrzeuges über die Zeit des Eingriffes verhindert wird. Durch das erfindungsgemäße Verfahren wird nur eine Änderung der Längskraft kompensiert. Das statische Bremsmoment higegen bleibt unverändert.

Mittels des Erfindungsgemäßen Verfahrens wird die Änderung der Längskraft durch den Bremseingriff des ESP über einen längeren Zeitraum verteilt, wodurch die Wahrnehmbarkeit reduziert wird. Es erfolgt somit ein Dämpfung der Längsdynamikgrößenänderung. Erfindungsgemäß wird dazu das Motormoment lediglich temporär auf geeignete Weise gegenüber der Fahrervorgabe geändert.

Da bei hohen Eingriffsmomenten der Bremse über längere Zeit eine Reduzierung der Fahrzeuggeschwindigkeit durch das ESP gewollt ist, kann es erfindungsgemäß vorgesehen sein, die Höhe der Fahrervorgabe bezüglich des Motormomentes und/oder eine Änderung dieser Fahrervorgabe über den Zeitraum des Eingriffes auszuwerten.

Erhöht der Fahrer des Kraftfahrzeuges beispielsweise im Zeitpunkt des Eingriffes oder ist das vom Fahre vorgegebene Motorenmoment bereits sehr hoch, ist eine langsamere Reduzierung des erfindungsgemäß angehobenen Motorenmomentes sinnvoll, da die auftretende Dynamik des Kraftfahrzeuges so vom Fahrer beabsichtigt scheint. Reduziert der Fahrer des Kraftfahrzeuges hingegen das Motorenmoment im Zeitpunkt des Eingriffes, kann eine Reduzierung des erhöhten Motormomentes schneller erfolgen, da der Fahrer bewusst eine entsprechende Längsdynamikgrößenänderung hervorruft. Es kann somit in einer Ausgestaltung der Erfindung vorgesehen sein, dass ein Angleichen des effektiven Motormomentes an den Fahrerwunsch nach Rücknahme der erfindungsgemäßen Motormomentenänderung unter Berücksichtigung eines Gradienten des Fahrerwunsches über die Zeit des Eingriffes erfolgt.

In einer weiteren Ausgestaltung der Erfindung kann es vorgesehen sein, die Wahrscheinlichkeit und/oder Größe einer bevorstehenden Erhöhung des Motormomentes zur Kompensation einer Längsdynamikgrößenänderung abzuschätzen. So kann es beispielsweise vorgesehen sein, dass Motormoment in Abhängigkeit des abgeschätzten bevorstehenden Eingriffs um ein definiertes Moment unter die Fahrervorgabe abzusenken bzw. später zurückzunehmen. Hierdurch ist es zum Zeitpunkt des Eingriffs nicht notwendig, das Motormoment über die Fahrervorgabe hinaus zu erhöhen. Eine Erhöhung kann in einem solchen Fall der vorherigen Absenkung zur Kompensation der durch den Bremseingriff auftretenden Längsdynamikgrößenänderung wieder bis auf die Fahrervorgabe angehoben werden. Zur Abschätzung des Wahrscheinlichkeit und/oder Größe eines bevorstehenden Eingriffes können neben Daten über die Fahrzeugdynamik wie sie im ESP-System Berücksichtigung finden beispielsweise die übrigen Daten des Motormanagements berücksichtigt werden.
In einer weiteren Ausgestaltung der Erfindung kann es vorgesehen sein, dass eine dynamische Anpassung der Kompensation vorgesehen ist. Das heißt, ist beispielsweise das Bremseingriffsmoment sehr hoch, weil ein entsprechender Eingriff dringend notwendig ist, wird weniger Längsdynamikgrößenänderung kompensiert oder schneller auf die Fahrervorgabe zurückgefiltert. Dies kann so weit gehen, dass das Motormoment sogar unter die Fahrervorgabe abgesenkt wird.
In einer Ausgestaltung des erfindungsgemäßen Verfahrens ist es vorgesehen, dass der Filter in Abhängigkeit des vom Fahrer im Zeitpunkt der Bremseinwirkung abgerufenen Motormoments festgelegt wird. Hierdurch ist eine wie zuvor beschriebene Anpassung der Kompensation möglich.
In einer weiteren Ausgestaltung der Erfindung ist es vorgesehen, dass der Filter ein Tiefpassfilter ist. Dies stellt eine einfache Art dar, dass dynamische Bremsmoment zu ermitteln, welches durch die Motormomentenanhebung kompensiert werden soll.
In einer weiteren Ausgestaltung der Erfindung wird der Schwellwert des Filters in Abhängigkeit des vom Fahrer im Zeitpunkt der Bremseinwirkung abgerufenen Motormoments festgelegt. Auch dies erlaubt eine dynamische Anpassung des erfindungsgemäßen Eingriffs an den Fahrerwunsch. Dabei stellt der Schwellwert des Filters den Punkt dar, ab dessen Überschreitung der Rohwert der Längsdynamikgrößenänderung dem Filter unterworfen wird.

Gemäß der Erfindung erfolgt bei einer Änderung des vom Fahrer des Kraftfahrzeuges abgerufenen Motormoments im Zeitpunkt der Kompensation eine Anpassung des Filters und/oder des Schwellwertes zum Erhalt eines in Richtung der vom Fahrer gewünschten Motormomentänderung angepassten Kompensationsmotormoments.

Desweiteren kann es in einer Ausgestaltung der Erfindung vorgesehen sein, dass das Kompensationsmotormoment unter Berücksichtigung der im Zeitpunkt der Kompensation vorliegenden Getriebeübersetzung ermittelt wird. Hierdurch kann eine verbesserte Anpassung des Kompensationsmomentes an die Fahrsituation erfolgen.
Erfindungsgemäß wird desweiteren eine Vorrichtung zur Kompensation der durch einen Bremseingriff eines elektronischen Stabilitätsprogrammes (ESP) hervorgerufenen Längsdynamikgrößenänderung in einem Kraftfahrzeug, aufweisend eine Einrichtung zur Ermittlung der durch den Bremseingriff hervorgerufenen Längsdynamikgrößenänderung, eine Einrichtung zur Festlegung eines Filters zur Filterung des ermittelten Längsdynamikgrößenänderungswertes, eine Einrichtung zur Ermittlung eines gefilterten Längsdynamikgrößenänderungswertes unter Verwendung des festgelegten Filters, eine Einrichtung zur Ermittlung der Differenz zwischen dem ermittelten Rohwert der Längsdynamikgrößenänderung und dem gefilterten Längsdynamikgrößenänderungswert, sowie eine Einrichtung zur Bereitstellung eines Kompensationsmotormoments, wobei die Einrichtungen signaltechnisch derart miteinander Verbunden sind, dass die durch einen Bremseingriff eines elektronischen Stabilitätsprogrammes (ESP) hervorgerufene Längsdynamikgrößenänderung zumindest teilweise durch das Kompensationsmotormoment kompensierbar ist, wobei bei einer Änderung des vom Fahrer des Kraftfahrzeuges abgerufenen Motormoments im Zeitpunkt der Kompensation eine Anpassung des Filters und/oder des Schwellenwertes, zum Erhalt eines in Richtung der vom Fahrer gewünschten Motormomentänderung angepassten Kompensationsmotormoments, erfolg.
In einer Ausgestaltung der erfindungsgemäßen Vorrichtung kann es dabei vorgesehen sein, dass diese Bestandteil eines ESP-Systems in einem Kraftfahrzeug ist. Eine Integration einer Erfindungsgemäßen Vorrichtung in ein ESP-System erlaubt, die bereits im ESP-System auflaufenden Daten und Werte der im Kraftfahrzeug vorgesehenen Sensoren zur erfindungsgemäßen Ermittlung eines Kompensationsmotormomentes zu nutzen. Dies ermöglicht eine einfache Integration des erfindungsgemäßen Verfahrens in die Steuerungselektronik eines Kraftfahrzeuges.
Gemäß einer weiteren Ausgestaltung der erfindungsgemäßen Vorrichtung umfasst der Filter einen Tiefpassfilter, eine Steigungsbegrenzung und/oder eine Rampe.

Desweiteren kann es in einer Ausgestaltung der Vorrichtung vorgesehen sein, dass die Einrichtung zur Ermittlung der durch den Bremseingriff hervorgerufenen Längsdynamikgrößenänderung einen Beschleunigungssensor umfasst. Dieser kann insbesondere dazu geeignet sein, ein fehlerhaftes Beschleunigen des Fahrzeugs zu vermeiden.

Die Erfindung wird nachfolgend anhand von Zeichnungen weiter erläutert.
- Fig. 1: zeigt ein Momentendiagramm der im Fahrzeug auftretenden Längskräfte.
- Fig. 2: zeigt ein Ablaufschema eines erfindungsgemäßen Verfahrens.
- Fig. 3: zeigt ein Funktionsschema einer erfindungsgemäßen Vorrichtung.

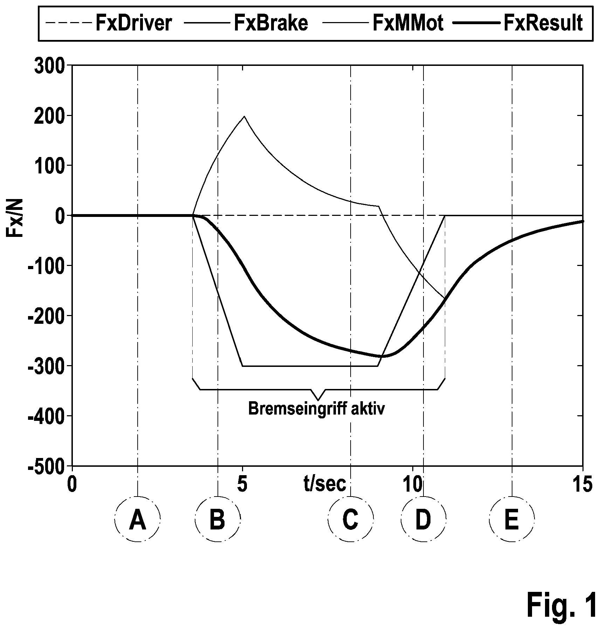

Fig. 1 zeigt ein Momentendiagramm der im Fahrzeug auftretende Längsdynamik bzw. Längskraft. Hierbei bedeuten FxDriver die aus dem Motormoment gemäß Fahrerwunsch resultierende Längskraft, FxBrake die durch den ESP-Bremseingriff ohne Motormomentenanpassung resultierende Längskraft, FxMMot die aus der Motormomentenanpassung ohne Bremseingriff des ESP resultierende Längskraft und FxResult die resultierende Längskraft bei ESP-Bremseingriff und Motormomentenanpassung. (A) zeigt die Längskraft bei keinem Eingriff und keiner Motormomentenanpassung. Die Längskräfte der Fahrervorgabe ist hierbei konstant 0 N. Bei (B) hat der Eingriff des erfindungsgemäßen Verfahrens bzw. der Vorrichtung begonnen. Ohne Motormomentenanpassung würde sich die Längskraft plötzlich verringern (FxBrake). Durch eine schnelle Motormomentenanhebung über die Fahrervorgabe hinaus (FxMMot) wird die resultierende Längsdynamikgrößenänderung stark gedämpft (FxResult). Bei (C) ändert sich die Stärke des Eingriffsmomentes kaum. Die Motormomentenanhebung wird langsam reduziert. Die resultierende Längskraft wird langsam kleiner. Der Fahrer kann bei Bedarf zusätzlich die Motormomentenvorgabe erhöhen, in dem er Gas gibt. Ist dies der Fall, kann die Reduzierung des Eingriffsmomentes (Kompensationsmoment) langsamer erfolgen. Bei (D) wird das Eingriffsmoment schnell reduziert. Ohne Motormomentenanpassung würde sich die Längskraft plötzlich erhöhen (FxBrake). Durch eine schnelle Motormomentenabsenkung unter die Fahrervorgabe wird die resultierende Längsdynamikgrößenänderung stark gedämpft. Bei (E) ist der Eingriff beendet. Die Motormomentenabsenkung wird langsam zurückgenommen, bis wieder die Fahrervorgabe erreicht ist. Zeigt der Fahrer an, dass er Traktion braucht (sehr hohe Fahreranforderung oder steigende Fahreranforderung), kann die Motormomentenabsenkung schneller zurück genommen werden.

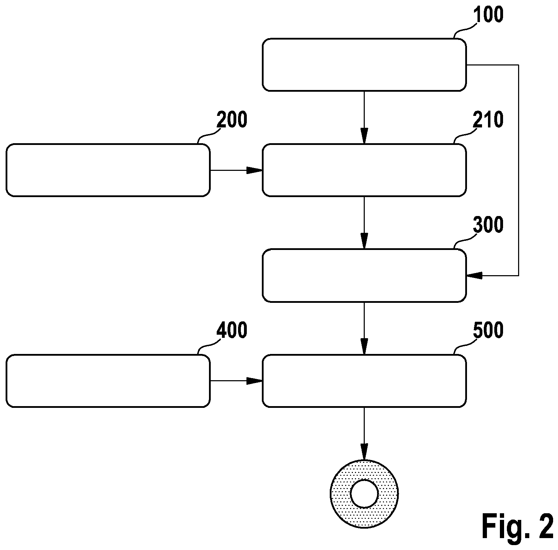

Fig. 2 zeigt ein Ablaufschema eines erfindungsgemäßen Verfahrens. Die durch den Bremseingriff hervorgerufenen Längsdynamikgrößenänderung 100 wird ermittelt. Dies kann beispielsweise auf Basis der über die Fahrzeugdynamik vorliegenden Daten wie z.B. Lenkwinkel, Raddrehzahl oder Gierrate erfolgen. Anschließend wird ein Filter 200 zur Filterung des ermittelten Längsdynamikgrößenänderungswertes 100 festgelegt. Die Auswahl des Filters 200 kann dabei von der jeweiligen Fahrsituation oder auch weiteren Faktoren abhängig sein. Insbesondere kann der Filter ein Tiefpassfilter, eine Steigungsbegrenzung und/oder eine Rampe sein. Der ermittelte Längsdynamikgrößenänderungswert 100 wird mittels des festgelegten Filters 200 gefiltert, um einen gefilterten Längsdynamikgrößenänderungswert 210 zu erhalten. Anschließend wird die Differenz 300 zwischen dem ermittelten Rohwert der Längsdynamikgrößenänderung 100 und dem gefilterten Längsdynamikgrößenänderungswert 210 ermittelt. Die ermittelte Differenz dient zur Änderung des Motormomentes. Das vom Fahrer des Kraftfahrzeuges abgerufenen und auf die Antriebsräder des Kraftfahrzeuges einwirkenden Motormomentes 400 wird um den ermittelten Differenzwert 300 zum Erhalt eines Kompensationsmotormoments 500 geändert.

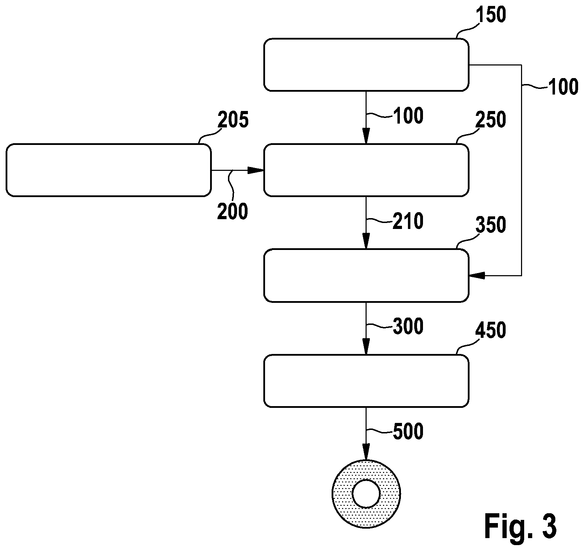

Fig. 3 zeigt ein Funktionsschema einer erfindungsgemäßen Vorrichtung. Die Vorrichtung zur Kompensation der durch einen Bremseingriff eines elektronischen Stabilitätsprogrammes (ESP) hervorgerufenen Längsverzögerung in einem Kraftfahrzeug, weist eine Einrichtung 150 zur Ermittlung der durch den Bremseingriff hervorgerufenen Längsdynamikgrößenänderung 100 auf. Desweiteren weist die Vorrichtung eine Einrichtung 205 zur Festlegung eines Filters 200 zur Filterung des ermittelten Längsdynamikgrößenänderungswertes 100, eine Einrichtung 250 zur Ermittlung eines gefilterten Längsdynamikgrößenänderungswertes 210 unter Verwendung des festgelegten Filters 200 und eine Einrichtung 350 zur Ermittlung der Differenz 300 zwischen dem ermittelten Rohwert der Längsdynamikgrößenänderung 100 und dem gefilterten Längsdynamikgrößenänderungswert 210, sowie eine Einrichtung 450 zur Bereitstellung eines Kompensationsmotormoments 500. Die Einrichtungen 150, 250, 350, 450 sind signaltechnisch derart miteinander Verbunden, dass die durch einen Bremseingriff eines elektronischen Stabilitätsprogrammes (ESP) hervorgerufene Längsverzögerung 100 zumindest teilweise durch das Kompensationsmotormoment 500 kompensierbar ist.

## Patentansprüche

1. Verfahren zur temporären Kompensation der durch einen Bremseingriff eines elektronischen Stabilitätsprogrammes (ESP) hervorgerufenen Längsverzögerung in einem Kraftfahrzeug, aufweisend die Verfahrensschritte:
- Ermitteln der durch den Bremseingriff hervorgerufenen Längsdynamikgrößenänderung (100);
- Festlegen eines Filters (200) zur Filterung des ermittelten Längsdynamikgrößenänderungswertes (100);
- Filtern des ermittelten Längsdynamikgrößenänderungswertes (100) mittels des festgelegten Filters (200) zum Erhalt eines gefilterten Längsdynamikgrößenänderungswertes (210);
- Ermittlung der Differenz (300) zwischen dem ermittelten Rohwert dem Längsdynamikgrößenänderungswert (100) und dem gefilterten Längsdynamikgrößenänderungswert (210);
- Änderung des vom Fahrer des Kraftfahrzeuges abgerufenen und auf die Antriebsräder des Kraftfahrzeuges einwirkenden Motormomentes (400) in Abhängigkeit des ermittelten Differenzwerts (300) zum Erhalt eines Kompensationsmotormoments (500), wobei bei einer Änderung des vom Fahrer des Kraftfahrzeuges abgerufenen Motormoments (400) im Zeitpunkt der Kompensation eine Anpassung des Filters (200) und/oder des Schwellwertes (220), zum Erhalt eines in Richtung der vom Fahrer gewünschten Motormomentänderung angepassten Kompensationsmotormoments (500), erfolgt.

2. Verfahren nach Anspruch 1, wobei der Längsdynamikgrößenänderung (100) eine Längskraftänderung und/oder ein Längsverzögerung ist.

3. Verfahren nach einem der vorhergehenden Ansprüche, wobei die Änderung des vom Fahrer des Kraftfahrzeuges abgerufenen und auf die Antriebsräder des Kraftfahrzeuges einwirkenden Motormomentes (400) zum Erhalt eines Kompensationsmotormoments (500) um den ermittelten Differenzwertes (300) erfolgt.

4. Verfahren nach einem der vorhergehenden Ansprüche, wobei der Filter (200) in Abhängigkeit des vom Fahrer im Zeitpunkt der Bremseinwirkung abgerufenen Motormoments (400) festgelegt wird.

5. Verfahren nach einem der vorhergehenden Ansprüche, wobei Filter (200) ein Tiefpassfilter ist.

6. Verfahren nach Anspruch 5, wobei der Schwellwert (220) des Filters (200) in Abhängigkeit des vom Fahrer im Zeitpunkt der Bremseinwirkung abgerufenen Motormoments (400) festgelegt wird.

7. Verfahren gemäß einem der vorhergehenden Ansprüche, wobei das Kompensationsmotormoment (500) unter Berücksichtigung der im Zeitpunkt der Kompensation vorliegenden Getriebeübersetzung ermittelt wird.

8. Vorrichtung zur Kompensation der durch einen Bremseingriff eines elektronischen Stabilitätsprogrammes (ESP) hervorgerufenen Längsverzögerung in einem Kraftfahrzeug, aufweisend eine Einrichtung (150) zur Ermittlung des durch den Bremseingriff hervorgerufenen Längsdynamikgrößenänderungswertes (100), eine Einrichtung (205) zur Festlegung eines Filters (200) zur Filterung des ermittelten Längsdynamikgrößenänderungswertes (100), eine Einrichtung (250) zur Ermittlung eines gefilterten Längsdynamikgrößenänderungswertes (210) unter Verwendung des festgelegten Filters (200), eine Einrichtung (350) zur Ermittlung der Differenz (300) zwischen dem ermittelten Rohwert des Längsdynamikgrößenänderungswertes (100) und dem gefilterten Längsdynamikgrößenänderungswert (210), sowie eine Einrichtung (450) zur Bereitstellung eines Kompensationsmotormoments (500), wobei die Einrichtungen (150, 250, 350, 450) signaltechnisch derart miteinander Verbunden sind, dass der durch einen Bremseingriff eines elektronischen Stabilitätsprogrammes (ESP) hervorgerufene Längsdynamikgrößenänderungswertes (100) zumindest teilweise durch das Kompensationsmotormoment (500) kompensierbar ist, wobei bei einer Änderung des vom Fahrer des Kraftfahrzeuges abgerufenen Motormoments (400) im Zeitpunkt der Kompensation eine Anpassung des Filters (200) und/oder des Schwellwertes (220), zum Erhalt eines in Richtung der vom Fahrer gewünschten Motormomentänderung angepassten Kompensationsmotormoments (500), erfolgt.

9. Vorrichtung gemäß Anspruch 8, wobei diese Bestandteil eines ESP-Systems in einem Kraftfahrzeug ist.

10. Vorrichtung gemäß einem der Ansprüche 8 und 9, wobei der Filter (200) einen Tiefpassfilter, eine Steigungsbegrenzung und/oder eine Rampe umfasst.

11. Vorrichtung gemäß einem der Ansprüche 8 bis 10, wobei die Einrichtung (150) zur Ermittlung der durch den Bremseingriff hervorgerufenen Längsdynamikgrößenänderungswertes (100) einen Beschleunigungssensor (151) umfasst.

## Claims

1. Method for the temporary compensation of the longitudinal deceleration in a motor vehicle, caused by a braking intervention of an electronic stability program (ESP), having the method steps:
- determining the longitudinal dynamic variable change (100) caused by the braking intervention;
- defining a filter (200) for filtering the determined longitudinal dynamic variable change value (100);
- filtering the determined longitudinal dynamic variable change value (100) by means of the defined filter to obtain a filtered longitudinal dynamic variable change value (210);
- determining the difference (300) between the determined raw value of the longitudinal dynamic variable change value (100) and the filtered longitudinal dynamic variable change value (210);
- changing the engine torque (400) requested by the driver of the motor vehicle and acting on the drive wheels of the motor vehicle on the basis of the determined difference value (300) in order to obtain a compensation engine torque (500), wherein, in the event of a change in the engine torque (400) requested by the driver of the motor vehicle at the time of the compensation, adaptation of the filter (200) and/or the threshold value (220) is carried out in order to obtain a compensation engine torque (500) that is adapted in the direction of the engine torque change desired by the driver.

2. Method according to Claim 1, wherein the longitudinal dynamic variable change (100) is a longitudinal force change and/or a longitudinal deceleration.

3. Method according to one of the preceding claims, wherein the engine torque (400) requested by the driver of the motor vehicle and acting on the drive wheels of the motor vehicle is changed by the determined difference value (300) in order to obtain a compensation engine torque (500).

4. Method according to one of the preceding claims, wherein the filter (200) is defined on the basis of the engine torque (400) requested by the driver at the time of the braking intervention.

5. Method according to one of the preceding claims, wherein the filter (200) is a low-pass filter.

6. Method according to Claim 5, wherein the threshold value (220) of the filter (200) is defined on the basis of the engine torque (400) requested by the driver at the time of the braking intervention.

7. Method according to one of the preceding claims, wherein the compensation engine torque (500) is determined whilst taking into account the transmission ratio present at the time of the compensation.

8. Device for the compensation of the longitudinal deceleration in a motor vehicle, caused by a braking intervention of an electronic stability programme (ESP), having a means (150) for determining the longitudinal dynamic variable change value (100) caused by the braking intervention, a means (205) for defining the filter (200) for filtering the determined longitudinal dynamic variable change value (100), a means (250) for determining a filtered longitudinal dynamic variable change value (210) by using the defined filter (200), a means (350) for determining the difference (300) between the determined raw value of the longitudinal dynamic variable change value (100) and the filtered longitudinal dynamic variable change value (210), and a means (450) for providing a compensation engine torque (500), wherein the means (150, 250, 350, 450) are interconnected in signalling terms in such a way that the longitudinal dynamic variable change value (100) caused by a braking intervention of an electronic stability program (ESP) can at least partly be compensated by the compensation engine torque (500), wherein, in the event of a change in the engine torque (400) requested by the driver of the motor vehicle at the time of the compensation, an adaptation of the filter (200) and/or of the threshold value (220) is carried out in order to obtain a compensation engine torque (500) that is adapted in the direction of the engine torque change desired by the driver.

9. Device according to Claim 8, wherein this is a constituent part of an ESP system in a motor vehicle.

10. Device according to either of Claims 8 and 9, wherein the filter (200) comprises a low-pass filter, a slope limit and/or a ramp.

11. Device according to one of Claims 8 to 10, wherein the means (150) for determining the longitudinal dynamic variable change value (100) caused by the braking intervention comprises an acceleration sensor (151).

## Revendications

1. Procédé destiné à la compensation temporaire de la décélération longitudinale dans un véhicule à moteur, provoquée par une intervention de freinage d'un programme de stabilité électronique (ESP), lequel procédé présente les phases de procédé suivantes :
- la détermination de la modification de la grandeur de la dynamique longitudinale (100) provoquée par l'intervention de freinage ;
- la mise en place d'un filtre (200) destiné au filtrage de la valeur déterminée de la modification de la grandeur de la dynamique longitudinale (100) ;
- le filtrage de la valeur déterminée de la modification de la grandeur de la dynamique longitudinale (100) au moyen du filtre (200) mis en place en vue de l'obtention d'une valeur filtrée de la modification de la grandeur de la dynamique longitudinale (210) ;
- la détermination de la différence (300) entre la valeur brute déterminée de la valeur de la modification de la grandeur de la dynamique longitudinale (100) et la valeur filtrée de la modification de la grandeur de la dynamique longitudinale (210) ;
- la modification du couple moteur (400) demandée par le conducteur du véhicule à moteur et agissant sur les roues motrices du véhicule à moteur en fonction de la valeur de la différence (300) déterminée en vue de l'obtention d'un couple moteur de compensation (500), où
une adaptation du filtre (200) et/ou de la valeur de seuil (220) se produit dans le cas d'une modification du couple moteur (400), demandée par le conducteur du véhicule à moteur, au moment de la compensation, en vue de l'obtention d'un couple moteur de compensation (500) adapté dans le sens de la modification du couple moteur souhaitée par le conducteur.

2. Procédé selon la revendication 1, où la modification de la grandeur de la dynamique longitudinale (100) est une modification de la force longitudinale et/ou une décélération longitudinale.

3. Procédé selon l'une des revendications précédentes, où la modification du couple moteur (400) demandée par le conducteur du véhicule à moteur et agissant sur les roues motrices du véhicule à moteur se produit en vue de l'obtention d'un couple moteur de compensation (500), cette modification du couple moteur correspondant à la valeur de la différence (300) déterminée.

4. Procédé selon l'une des revendications précédentes, où le filtre (200) est mis en place en fonction du couple moteur (400) demandé par le conducteur au moment de l'action de freinage.

5. Procédé selon l'une des revendications précédentes, où le filtre (200) est un filtre passe-bas.

6. Procédé selon la revendication 5, où la valeur de seuil (220) du filtre (200) est établie en fonction du couple moteur (400) demandé par le conducteur au moment de l'action de freinage.

7. Procédé selon l'une des revendications précédentes, où le couple moteur de compensation (500) est déterminé en prenant en considération le rapport de transmission existant au moment de la compensation.

8. Dispositif destiné à la compensation de la décélération longitudinale dans un véhicule à moteur, provoquée par une intervention de freinage d'un programme de stabilité électronique (ESP), lequel dispositif présente un mécanisme (150) destiné à la détermination de la valeur de la modification de la grandeur de la dynamique longitudinale (100) provoquée par l'intervention de freinage, un mécanisme (205) destiné à la mise en place d'un filtre (200) en vue du filtrage de la valeur déterminée de la modification de la grandeur de la dynamique longitudinale (100), un mécanisme (250) destiné à la détermination d'une valeur filtrée de la modification de la grandeur de la dynamique longitudinale (210) en utilisant le filtre (200) mis en place, un mécanisme (350) destiné à la détermination de la différence (300) entre la valeur brute déterminée de la valeur de la modification de la grandeur de la dynamique longitudinale (100) et la valeur filtrée de la modification de la grandeur de la dynamique longitudinale (210), ainsi qu'un mécanisme (450) destiné à la mise à disposition d'un couple moteur de compensation (500), les mécanismes (150, 250, 350, 450) étant reliés les uns aux autres, sur le plan de la technique de signalisation, de telle sorte que la valeur de la modification de la grandeur de la dynamique longitudinale (100), suscitée par une intervention de freinage d'un programme de stabilité électronique (ESP), peut être compensée, tout au moins en partie, par le couple moteur de compensation (500), où une adaptation du filtre (200) et/ou de la valeur de seuil (220) se produit dans le cas d'une modification du couple moteur (400), demandée par le conducteur du véhicule à moteur au moment de la compensation, en vue de l'obtention d'un couple moteur de compensation (500) adapté dans le sens de la modification du couple moteur souhaitée par le conducteur.

9. Dispositif selon la revendication 8, ledit dispositif étant un élément constitutif d'un système ESP dans un véhicule à moteur.

10. Dispositif selon l'une des revendications 8 et 9, où le filtre (200) comprend un filtre passe-bas, une limitation de l'inclinaison et/ou une rampe.

11. Dispositif selon l'une des revendications 8 à 10, où le mécanisme (150) destiné à la détermination de la valeur de la modification de la grandeur de la dynamique longitudinale (100) provoquée par l'intervention de freinage comprend un capteur d'accélération (151).
